(19) **Europäisches Patentamt**

**European Patent Office**

**Office européen des brevets**

(11) **EP 1 382 219 B1**

(12) **EUROPEAN PATENT SPECIFICATION**

(45) Date of publication and mention
of the grant of the patent:
**22.03.2006 Bulletin 2006/12**

(51) Int Cl.:
***H04Q 11/00*** (2006.01)

(21) Application number: **02724549.7**

(22) Date of filing: **18.04.2002**

(86) International application number:
**PCT/IB2002/001435**

(87) International publication number:
**WO 2002/087276 (31.10.2002 Gazette 2002/44)**

(54) **Method and device for robust real-time estimation of bottleneck bandwidth**

Verfahren und Vorrichtung zur robusten Echtzeit-Abschätzung der Engpass-Bandbreite

Procédé et dispositif pour l'estimation robuste en temps réel de bande passante de goulot d'étranglement

(84) Designated Contracting States:
**AT BE CH CY DE DK ES FI FR GB GR IE IT LI LU MC NL PT SE TR**

(30) Priority: **19.04.2001 US 837936**

(43) Date of publication of application:
**21.01.2004 Bulletin 2004/04**

(73) Proprietor: **Koninklijke Philips Electronics N.V.**
**5621 BA Eindhoven (NL)**

(72) Inventors:
• **RADHA, Hayder**
**NL-5656 AA Eindhoven (NL)**
• **LOGUINOV, Dmitri**
**NL-5656 AA Eindhoven (NL)**

(74) Representative: **Groenendaal, Antonius W. M.**
**Philips**
**Intellectual Property & Standards**
**P.O. Box 220**
**5600 AE Eindhoven (NL)**

(56) References cited:
• **SISALEM D; SCHULZRINNE H: "The Loss-Delay Adjustment Algorithm: A TCP-friendly Adaptation Scheme" NETWORK AND OPERATING SYSTEM SUPPORT FOR DIGITAL AUDIO AND VIDEO (NOSSDAV), [Online] 8 - 10 July 1998, XP002226884 Cambridge (UK) Retrieved from the Internet: <URL:http: //www.cs.columbia.edu/~hgs/paper s/ Sisa9807_Loss.pdf> [retrieved on 2003-01-10]**

**Description**

BACKGROUND OF THE INVENTION

Field of invention

The present invention relates to the field of the Internet. More particularly, the present invention relates to a method and system for estimating in real time the bottleneck bandwidth of the Internet system.

Description of the Invention

The Internet has grown into a vastly diverse connection of many different networks and consists of links of greatly varying bandwidths. As a result, the end-to-end network parameters of the Internet have become more complicated to determine. In addition, most data applications cannot predict their own traffic parameters. Accordingly, the Internet system usually requires a service that dynamically estimates and adapts to the bottleneck bandwidth of an end-to-end Internet path. The bottleneck bandwidth represents the speed of the slowest link of an end-to-end path.

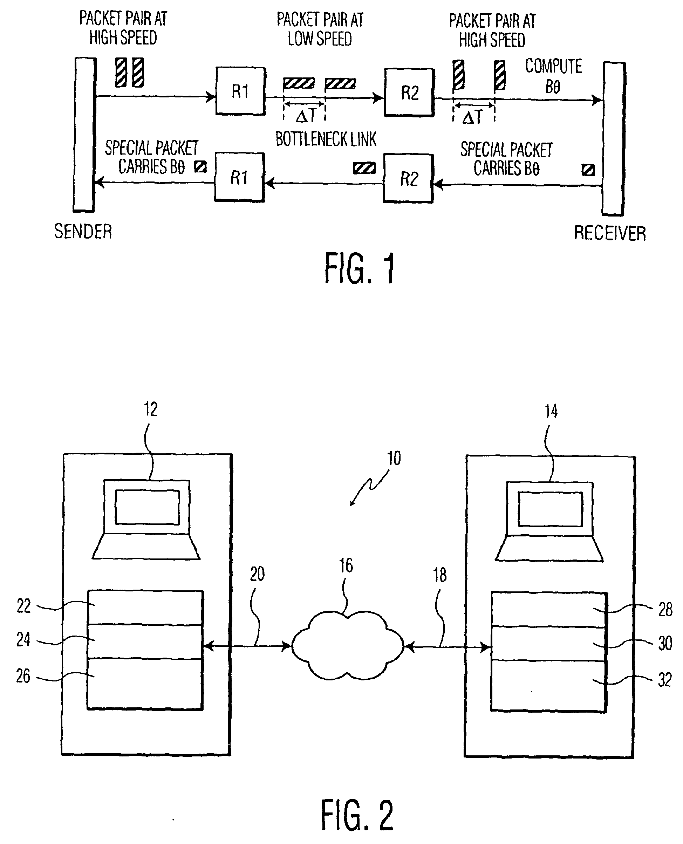

FIG. 1 depicts the conventional estimation mechanism known as Receiver-Based Packet Pair (RBPP). For the purpose of simplicity and clarity, the vertical dimension of the packets represents the link speed, and the horizontal dimension represents the transmission time. In the conventional RBPP method, the sender transmits to the receiver two back-to-back packets (which are called the packet pair), of sizes $s_1$ and $s_2$, respectively. As these packets traverse an end-to-end path, they are spread out by the bottleneck link. The spacing between the arrived packets is typically increased because the bottleneck link is slower than the previous links. As a consequence, it takes longer to transmit each packet over the slow bottleneck link. In the remaining path, the new spacing $\Delta T$ between the packets is preserved unless much a slower bottleneck link is encountered.

As shown in FIG. 1, upon receiving the spaced packets, the receiver computes the value of the bottleneck bandwidth $B_B$, which is calculated by $s_2/\Delta T$ according to the conventional method. Thereafter, the receiver generates a special packet or acknowledgment packet (ACK) with the computed estimate value, $B_B$, and transmits it back to the sender. The sender can then adjust the sending rate based on the estimation of the bottleneck bandwidth $B_B$.

Another prior art method currently deployed follows a Packet Bunch Modes (PBM) technique, which is basically steamed from the above RBPP method. The PBM is aimed at measuring the bottleneck bandwidth during an off-line mode. In addition, the PBM applies a series of filtering and estimation techniques to all samples collected during a given session, thereby requiring an entire set of bandwidth samples to be ready at the time of estimation.

Both of the above prior art methods of estimating the bandwidth have many drawbacks. First, both techniques are highly sensitive to packet compression events - a phenomenon which occur when packets arrive closer to each other than they were originally sent out. Thus, both methods produce an inaccurate estimation of bottleneck bandwidth if employed in the existing Internet in real-time. In addition, as the second method is proposed for off-line operation and requires an entire set of bandwidth samples to be ready at the time of estimation, real-time application of the method is not feasible. Moreover, both methods do not address the delay variation incurred by the OS kernel of the client machine during the scheduling and switching operations. Hence, the detected inter-packet spacing $\Delta T$ may be significantly skewed by the OS operation before the packets are passed to the destination node, thus resulting in an inaccurate estimation of the bottleneck bandwidth $B_B$. Furthermore, both methods require the transmission time stamps to be placed in each packet, thereby increasing the overhead. In addition, RBPP sends special probe packets to measure the bandwidth and incurs extra bandwidth overhead.

Sisalem, D. and Schulzrinne, H: "The Loss-Delay Based Adjustment Algorithm: A TCP-Friendly Adaption Scheme", Network and Operating System Support for Digital Audio and Video (NOSSDAV), [Online] 8-10 July 1998, XP002226884 Cambridge, UK discloses how a bottleneck bandwidth is estimated within the framework of RTP.

Therefore, there is a need for an improved method and system to accurately measure the bottleneck bandwidth in a real-time application.

SUMMARY OF THE INVENTION

In the preferred embodiment, the present invention relates to estimating the real-time bottleneck bandwidth of an end-to-end Internet path between a server and client. Accordingly, a method capable of estimating the bottleneck bandwidth is provided by claim 1.

The present invention also relates to a client device according to claim 10 and to a server-client system according to claim 11.

BRIEF DESCRIPTION OF THE DRAWINGS

FIG. 1 illustrates a conventional bandwidth estimation mechanism;
FIG. 2 is a schematic view of an exemplary architecture of the bandwidth estimating system according to the present invention;
FIG. 3 illustrates the format of a user datagram protocol (UDP) packet at the server end in accordance with the present invention;
FIG. 4(a) is a flow chart illustrating the operation of the bottleneck bandwidth estimator according to the present invention;

FIG. 4(b) is a flow chart illustrating a greater detail of estimating the bottleneck bandwidth estimator according to the present invention;

FIG. 5 illustrates a particular mechanism of estimating the bandwidth of the packets of the burst according to the present invention; and,

FIG. 6 illustrates a particular mechanism of handling the packet compression event according to the present invention.

DETAILED DESCRIPTION OF THE PREFERRED EMBODIMENT

In the following description, for purposes of explanation rather than limitation, specific details are set forth such as the particular architecture, interfaces, techniques, etc., in order to provide a thorough understanding of the present invention. However, it will be apparent to those skilled in the art that the present invention may be practiced in other embodiments which depart from these specific details. Moreover, for the purpose of clarity, detailed descriptions of well-known devices, circuits, and methods are omitted so as not to obscure the description of the present invention with unnecessary detail.

Referring to FIG. 2, the server-client architecture 10 for streaming multimedia data over the Internet according to an exemplary embodiment of the present invention includes a first system 12, such as a server device, a second system 14, such as a client device. Both server and client are in communication with each other via the access link 18, 20 of the Internet network 16. The embodiment of the present invention is aimed at estimating a bottleneck bandwidth, which represents the speed of the slowest link of an end-to-end path, in a rapid and reliable way for the following transmission of data packets. The server system 12 comprises a central processing unit 22, a general purpose memory 24 and an operating system 26. The client system 14 also comprises amongst others a central processing unit 28, a general purpose memory 30 and an operating system 32.

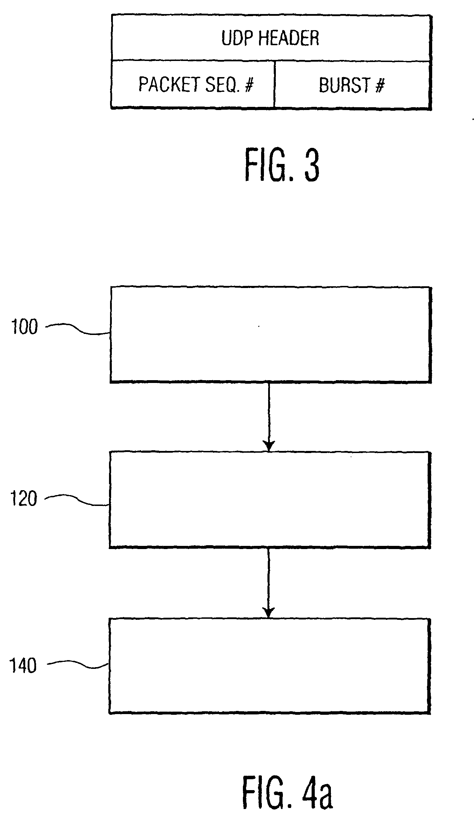

According to the exemplary embodiment of the present invention, the system 10 provides the server system 12 to use video traffic (i.e., burst packets) to estimate the bottleneck bandwidth rather than sending special packet pairs to measure the bottleneck bandwidth as in the prior art. The format of a UDP packet of each burst packet according to the present invention is shown in FIG. 3. Each packet in real-time application carries a burst identifier, which allows the receiver to distinguish packets from different bursts. For simplicity, the inventive bandwidth measurement will be referred to hereinafter as Extended Receiver-Based Packet Pair (ERBPP).

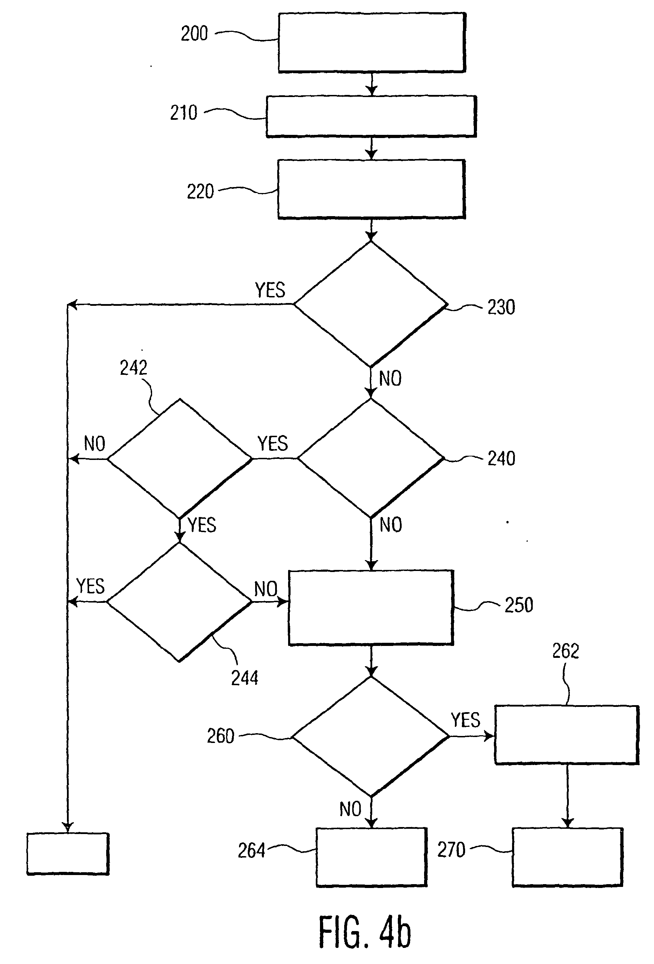

Now, a detailed description of performing real-time bandwidth estimation according to an exemplary embodiment of the present invention will be explained below in conjunction with FIG. 4(a) and FIG. 4(b).

Referring to FIG. 4(a), the inventive bandwidth estimation process consists of three steps - measurement step 100, filtering step 120, and estimation step 140. The filtering step 120 is an optional operation that is performed to further increase the accuracy of the bandwidth samples generated in the measurement step 100. Initially, the server system 12 transmits a plurality of bursts comprised of packets to the client system 14 via a bottleneck link path. In step 100, the bandwidth for each burst received at the client system 14 within a predetermined period is measured and collected in a set of samples $B_M(t, \Delta)$. Then, in step 120, certain collected samples are removed from the sample set due to the suspected compression or expansion caused by OS-related scheduling delays in delivering packets to the application layer. Again, the filtering step 120 is not required and only executed if a more accurate estimation can be obtained under the prevailing condition of the network. In step 140, a single estimate $b_{EST}(t, \Delta)$ that is the most recent and accurate estimation of the bottleneck bandwidth is determined according to the predetermined criteria. The principle of these three major operations will be described in greater detail below.

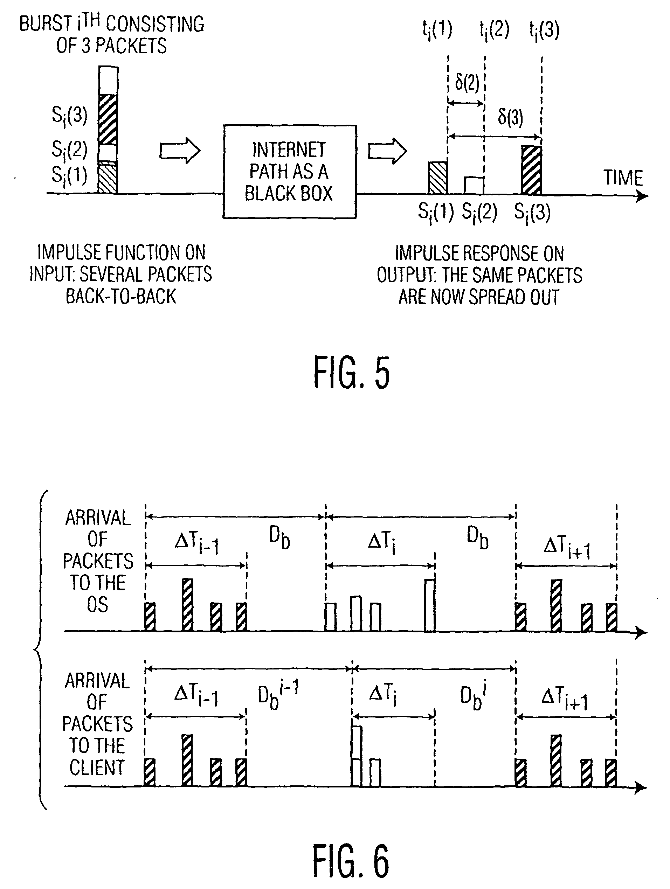

Referring to FIG. 4(b), according to an exemplary embodiment of the present invention, the server system 12 transmits data packets containing actual real-time data in bursts in step 200. Here, the packets that the server system 12 has to deliver to the client system 14 are transmitted at a maximum transmission speed of the adjacent link to guarantee the condition that the packets traveling along the end-to-end Internet path are queued and delayed at the bottleneck link. That is, the packets of each burst have to leave the server system 12 at a rate that is definitely higher than the bottleneck link's speed, so that the packets in each burst can be expanded before they arrive to the client system 14, as shown in FIG. 5. It is be noted that although the server system 12 uses packets of a different size in FIG. 5, the server system 12 may send packets of equal size in the embodiment of the present invention.

Then, in step 210, these packets pass through the Internet network and arrive at the client system 14. Upon receiving a plurality of packet bursts, the client system 14 computes the corresponding bottleneck bandwidth $B_i$ for each packet burst i received therein, in step 220. At this time, if there is a packet loss in any one of the bursts received at the client system 14, the bandwidth sample based on the burst with a missing packet is not included in the set of bandwidth samples, $B_M(t, \Delta)$ in step 230. To achieve this, the client system 14 analyzes the header information of the respective burst, as shown in FIG. 3, to identify any missing packets within a given burst. In addition, bursts of packets during which the client received a retransmitted packet, are discarded as well. If there were no missing packets in the burst of packets and no retransmission in the middle of the burst, a bandwidth sample $B_i$ is measures in step 230 as follows.

Upon receiving the burst packets originated from the server system 12, the client system 14 measures the corresponding bandwidth based on the packet-pair concept and maintains a data base of collected samples in set $B_M(t, \Delta)$, wherein $t$ represents the current time and $\Delta$ represents the "lifetime" of samples. That is, the client system 14 computes samples of the bottleneck bandwidth using the inter-packet spacing between the first and the last packets within each burst. Referring to FIG. 5, if the $i$-th burst consists of $n_i$ packets and the $k$-th packet of the burst is received at time $t_i(k)$, which contains $S_i(k)$ bytes, the client system 14 computes *partial* bandwidth samples $b_i(k)$ for each burst according to the following equation:

$$b_i(k) = \frac{1}{\delta(k)} \sum_{j=2}^{k} s_i(j),$$

where $2 \leq k \leq n_i$ and $\delta(k) = t_i(k) - t_i(l)$,
where each sample $b_i(k)$ represents an estimate of the bandwidth using the first $k$ ($k \geq 2$) packets of burst $i$. Here, the sum starts with the second packet ($j = 2$) in computing the bandwidth as the burst duration $[t_i(k)- _i(l)]$ does not include the transmission time of the very first packet of the burst over the bottleneck link. Preferably, the number of packets $n_i$ is set at least 3 packets in each burst; however, this number is not required. In the ERBPP method, each sample of bandwidth $B_i$ based on burst $i$ is equal to the last partial sample: $B_i = b_i(n_i)$. In the multi-channel link environment (hereinafter referred to as ERBPP$_+$ method), sample $B_i$ is selected as the smallest value of partial samples $b_i(k)$, for all $k$: $B_i = \forall k: \min (b_i(k))$. Furthermore, the ERBPP method that considers *only* bursts with at least m packets is called ERBPP$_m$. Suggested value of m is at least 3. Similarly, the ERBPP$_+$ method that analyzes at least $m$ packets is called ERBPP$_{m+}$. The same value $m = 3$ is suggested for ERBPP$_{m+}$. Once a samples $B_i$ is computed using ERBPP$_m$ or ERBPP$_{m+}$ at time $t$, it is added to the set of collected samples $B_M(t, \Delta)$ and stays there for no longer than $\Delta$ time units.

Accordingly, the client system 14 only needs to distinguish between packets in different bursts rather than the exact transmission time of each packet as required in the prior art. Hence, the only fields required in each packet header are one-bit (0 or 1) burst identifier and a packet sequence number. In addition, the inventive method has no bandwidth overhead associated with sending separate packet pairs as in the prior art since the actual video data in the form of a packet burst is used to compute the bandwidth. It is noted that the number of packets in a packet burst may be more than two packets depending on the streaming rate and desired burstiness. In addition, as many streaming media packet sizes are not constant, the number of packets per impulse (i.e., packet burst) varies.

Next, step 240 is performed. This filtering step is performed by the client system 14 to improve the accuracy of the generated samples $B_M(t, \Delta)$ prior to select-

ing the new estimate of the bottleneck bandwidth. For simplicity, the new resulting bandwidth samples after undergoing the filtering process will be referred to as $B_l(t, \Delta)$ hereinafter. According to the exemplary embodiment of the present invention, there are two types of filtering approaches used to improve the accuracy of the bottleneck bandwidth estimation. The former approach filters the generated samples $B_M(t, \Delta)$ by maintaining the lifetime of samples $\Delta$ to a predetermined time period. Thus, any bandwidth samples generated that exceed a threshold sample lifetime would be eliminated from the $B_M(t, \Delta)$ in step 242. In the preferred embodiment, the recommended values $\Delta$ range between 30 and 300 seconds.

On the other hand, the latter approach relates to reducing the amount of error introduced by random and deterministic delays inside the OS kernel of the client system 14 in delivering packets to the application layer (i.e., process scheduling delays, delays caused by low-resolution clock in the data-link layer). FIG. 6 illustrates this type of undesirable delays, namely packet compression and packet expansion, which alter the spacing between packets. Here, the packet compression refers to packets in a burst that arrive to the client system 14 with the spacing smaller than the inter-packet delay introduced by the bottleneck link. This type of compression can occur, for example, if the first packet in a pair encounters a large queuing delay at some high-speed interface after going through the bottleneck router, and the second packet catches up with the first packet by encountering no or little queuing delay at the same interface. As shown in FIG. 6, the first packet of burst i (the burst in the middle) is delayed by the OS of the client system 14 until the second packet of the same burst is received by the kernel. Then, both packets are scheduled and delivered to the application layer. In such a case, the application can erroneously identify the beginning of burst $i$ and use smaller burst length $\Delta t_i$ (instead of $\Delta T_i$) in its computation of ERBPP$_m$ bandwidth. The packet expansion refers to packets arriving to the client system 14 with the spacing larger than the one ideally introduced by the bottleneck link. The expansion can occur before or after passing the bottleneck router. As a consequence, the client system 14 can erroneously measure the bandwidth based on the expanded packet pair rather than the rate of the bottleneck link.

In order to eliminate an inaccurate estimation that may be caused by either the compression or expansion events, the exemplary embodiment of the present invention provides a filtering process to eliminate inaccurate bandwidth estimations out of the collected samples $B_M(t, \Delta)$ that is caused by the compression and/or expansion in step 244. The principle of the filtering operation is based on comparing the values of *observed* burst durations, $D_b^i$ and $D_b^{i-1}$, with the ideal value $D_b$ for each received burst $i$. That is, the inaccurate bandwidth samples encountering the OS-related delay are determined based on the quantity difference between an ideal burst duration prior to encountering the OS delay and an actual burst duration after encountering the OS delay. Referring to FIG. 6, the length of each burst has a fixed duration *of* $D_b$ time units (i.e., one burst is generated every $D_b$ time units). If no significant compression occurs during the transmission, the respective burst lengths between the top and bottom graphs of FIG. 6 will agree. Thus, in cases when they do not agree or if the burst duration $D_b^i$ (the actual burst duration) deviates from $D_b$ (the ideal burst duration) for more than $\alpha$ percent, the compression/expansion event is inferred. To state otherwise, if both $|1- D_b^i/D_b| \leq \alpha$ and $|1-D_b^{i-1}/D_b| \leq \alpha$, then the corresponding bandwidth sample will be kept in set $B_M(t, \Delta)$ and will be eliminated otherwise in step 244. A suggested value of $\alpha$, for example, ranges between 5% and 40%. For simplicity, the ERBPP$_m$ method with $\alpha$-percent filtering is referred to as ERBPP$_{m-\alpha}$, hereinafter.

Finally, in step 260, the client system 14 according to the present invention determines a new real-time bandwidth from the set of filtered samples $B_l(t, \Delta)$ by determining a single estimate $b_{EST}(t)$ representing the current value of the bottleneck link at time *t*. Here, the estimation of $b_{EST}(t)$ is divided into two approaches, the median approach or the statistical approach of set $B_l(t, \Delta)$. The median mode is applied to low-speed links (below 128 Kbps) in step 264, while the statistical mode is applied to high-speed links (above 128 Kbps) in step 262. The statistical mode of a set is such value x where the probability distribution function (PDF) $f(x)$ of the set reaches its maximum. In practice, the PDF is not known for finite sets and is usually replaced by the histogram of the set. The histogram of a set is computed by partitioning the set of values contained in the set into equal-size bins and computing the percentage of samples from the set that fall into each bin. The middle of the bin with the highest percentage is then selected as the mode of the set. For this invention, the suggested values for the bin size are between 1 Kbps and 5 Kbps. Accordingly, estimates $b_{EST}(t)$ can be used for congestion control or other purposes at any required time *t* through the use of the median or mode of set $B_l(t,\Delta)$. Furthermore, if a multi-channel link is deployed (or believed to be deployed by the client) between the server system 12 and the client system 14, the client will use the ERBPP$_{m+}$ method rather than the ERBPP$_m$ method.

In summary, the present invention provides a new bandwidth estimation mechanism, which achieves significant performance improvements over the existing bandwidth estimation algorithms. Having thus described a preferred embodiment for estimating the bottleneck bandwidth over a digital communications link, it should be apparent to those skilled in the art that certain advantages of the system have been achieved. The foregoing is to be constructed as only being an illustrative embodiment of this invention. Thus, persons skilled in the art can easily conceive of alternative arrangements providing a function similar to this embodiment without any deviation from the scope of this invention.

**Claims**

1. A method for estimating a bottleneck bandwidth used to support estimation of the bottleneck bandwidth between a server (12) and a client (14) in a communication system (10), the method comprising the steps of:

transmitting (200) a plurality of bursts comprised of packets from said server (12) to said client (14) via a bottleneck link of said system (10); computing (220) a set of bandwidth samples from each of said bursts received by said client (14) based an a difference between an inter-packet spacing between packets within each of said bursts, and determining (260) a best bottleneck bandwidth from said computed bandwidth samples, for the following transmission of data packets from said server (12) to said client (14); **characterized in that** the method further comprises the step of:

filtering (244) for inaccurate bandwidth samples from said computed bandwidth samples by rejecting bandwidth samples encountering an operating system delay of said client (14) system, wherein the bandwidth samples encountering said operating system delay is determined based on a quantity difference between an ideal burst duration prior to encountering said operating system delay and an actual burst duration after encountering said operating system delay.

2. The method of claim 1, wherein the plurality of said packet bursts is transmitted at a maximum speed by said server (12) system so that the inter-packet delay is introduced in each of said bursts.

3. The method of claim 1 or 2, further comprising the step of eliminating bandwidth samples having a missing packet within each of said bursts.

4. The method of claim 1 or 3, further comprising the step of eliminating bandwidth samples having a retransmitted packet.

5. The method of claim 1 or 4, wherein said bandwidth samples for each of said burst is computed based on a difference between an inter-packet spacing between the first and the last packet within each of said burst.

6. The method of claim 1 or 5, wherein the step of computing said bandwidth samples comprises the steps of:

determining the start time and the end time of the reception of the first and the last packet within each of said bursts; determining the packet size of the second packet and the last packet for each of said bursts; and, computing said bandwidth samples based on a difference between the packet size of the second packet and the last packet, divided by a difference between an inter-packet spacing duration between the first and the last packet within each of said bursts.

7. The method of any of claims 1 to 6, wherein said new bandwidth corresponds to a median value of said computed bandwidth samples for a low speed link.

8. The method of any of claims 1 to 6, wherein said new bandwidth corresponds to the statistical mode of said computed bandwidth samples for a high speed link.

9. The method of any of claims 1 to 6, where in said new bandwidth corresponds to a minimum bandwidth of said computed bandwidth samples if a multi-channel link is deployed between said server (12) and said client (14).

10. A client device for estimating a bottleneck bandwidth between a server (12) and the client device, the client device comprising:

receiving means being arranged to receive a plurality of bursts comprised of packets from the server via a bottleneck link; generating means being arranged to generate a set of bandwidth samples based on a difference between an inter-packet spacing between packets whithin each of said bursts; and, determining means being arranged to determine a new bottleneck bandwidth from said generated bandwidth samples according to a method as described in any of claims 1 to 9.

11. A server-client system (10) comprising a server computer (12) comprising transmitting means arranged to transmit a plurality of bursts comprised of packets via a bottleneck link of said system (10), and a client computer (14) according to claim 10.

**Patentansprüche**

1. Verfahren zum Abschätzen einer Engpass-Bandbreite, das zur Unterstützung der Abschätzung der Engpassbandbreite zwischen einem Server (12) und einem Client (14) in einem Kommunikationssystem (10) benutzt wird und folgende Schritte umfasst:

Übertragen (200) mehrerer Bursts, die aus Paketen bestehen, von dem Server (12) an den Client (14) über eine Engpass-Übertragungsstrecke des Systems (10), Berechnen (220) einer Menge von Bandbreitenstichproben aus jedem der von dem Client (14) empfangenen Bursts basierend auf einer Differenz zwischen einer Inter-Paket-Trennzeit zwischen Paketen innerhalb jedes der Bursts und Ermitteln (260) einer besten Engpass-Bandbreite aus den berechneten Bandbreitenstichproben für die nachfolgende Übertragung von Datenpaketen von dem Server (12) an den Client (14),

**dadurch gekennzeichnet, dass** das Verfahren weiterhin folgende Schritte umfasst:

Ausfiltern (244) von ungenauen Bandbreitenstichproben aus den berechneten Bandbreitenstichproben, indem Bandbreitenstichproben, die auf eine betriebssystembedingte Verzögerung des Clientsystems (14) treffen, zurückgewiesen werden, wobei die Bandbreitenstichproben, die auf die betriebssystembedingte Verzögerung treffen, basierend auf einer Größendifferenz zwischen einer idealen Burstdauer vor dem Auftreffen auf die betriebssystembedingte Verzögerung und einer tatsächlichen Burstdauer nach dem Auftreffen auf die betriebssystembedingte Verzögerung ermittelt werden.

2. Verfahren nach Anspruch 1, wobei die mehreren Paketbursts von dem Serversystem (12) bei einer Maximalgeschwindigkeit übertragen werden, so dass in jeden der Bursts die Inter-Paket-Verzögerung eingeführt wird.

3. Verfahren nach Anspruch 1 oder 2, das weiterhin den Schritt des Eliminierens von Bandbreitenstichproben mit einem fehlenden Paket innerhalb jedes der Bursts umfasst.

4. Verfahren nach Anspruch 1 oder 3, das weiterhin den Schritt des Eliminierens von Bandbreitenstichproben mit einem wiederholt übertragenen Paket umfasst.

5. Verfahren nach Anspruch 1 oder 4, wobei die Bandbreitenstichproben für jeden der Bursts basierend auf einer Differenz zwischen einer Inter-Paket-Trennzeit zwischen dem ersten und dem letzten Paket innerhalb jedes der Bursts berechnet werden.

6. Verfahren nach Anspruch 1 oder 5, wobei der Schritt des Berechnens der Bandbreitenstichproben die folgenden Schritte umfasst:

Ermitteln der Startzeit und der Endzeit des Empfangs des ersten und des letzten Pakets innerhalb jedes der Bursts,
Ermitteln der Paketgröße des zweiten Pakets und des letzten Pakets für jeden der Bursts und Berechnen der Bandbreitenstichproben basierend auf einer Differenz zwischen der Paketgröße des zweiten Pakets und des letzten Pakets dividiert durch eine Differenz zwischen einer Inter-Paket-Trennzeitdauer zwischen dem ersten und dem letzten Paket innerhalb jedes der Bursts.

7. Verfahren nach einem der Ansprüche 1 bis 6, wobei die neue Bandbreite für eine Übertragungsstrecke mit niedriger Geschwindigkeit einem Medianwert der berechneten Bandbreitenstichproben entspricht.

8. Verfahren nach einem der Ansprüche 1 bis 6, wobei die neue Bandbreite für eine Übertragungsstrecke mit hoher Geschwindigkeit dem statistischen Modus der berechneten Bandbreitenstichproben entspricht.

9. Verfahren nach einem der Ansprüche 1 bis 6, wobei die neue Bandbreite einer minimalen Bandbreite der berechneten Bandbreitenstichproben entspricht, wenn zwischen dem Server (12) und dem Client (14) eine Mehrkanal-Übertragungsstrecke eingesetzt wird.

10. Clientgerät zum Ermitteln einer Engpass-Bandbreite zwischen einem Server (12) und dem Clientgerät, wobei das Clientgerät Folgendes umfasst:

empfangende Mittel zum Empfangen mehrerer Bursts, die aus Paketen bestehen, von dem Server über eine Engpass-Übertragungsstrecke,
erzeugende Mittel zum Erzeugen einer Menge von Bandbreitenstichproben basierend auf einer Differenz zwischen einer Inter-Paket-Trennzeit zwischen Paketen innerhalb jedes der Bursts und
ermittelnde Mittel zum Ermitteln einer neuen Engpass-Bandbreite aus den erzeugten Bandbreitenstichproben gemäß einem Verfahren nach einem der Ansprüche 1 bis 9.

11. Server-Client-System (10), welches Folgendes umfasst: einen Server-Computer (12), der übertragende Mittel zum Übertragen mehrerer Bursts, die aus Paketen bestehen, über eine Engpass-Übertragungsstrecke des Systems (10) umfasst, und einen Client-Computer (14) gemäß Anspruch 10.

## Revendications

1. Procédé d'estimation d'une largeur de bande de goulot d'étranglement permettant l'estimation de la largeur de bande de goulot d'étranglement entre un serveur (12) et un client (14) dans un système de communication (10), le procédé comprenant les étapes suivantes :

transmission (200) d'une pluralité de salves constituées de paquets dudit serveur (12) audit client (14) via une liaison de goulot d'étranglement dudit système (10);
calcul (220) d'un ensemble d'échantillons de largeur de bande à partir de chacune desdites salves reçues par ledit client (14) sur la base d'une différence entre un espacement inter-paquets entre des paquets contenus dans chacune desdites salves; et
détermination (260) d'une largeur de bande de goulot d'étranglement à partir desdits échantillons de largeur de bande calculés, pour la transmission suivante de paquets de données dudit serveur (12) audit client (14);
**caractérisé en ce que** le procédé comprend en outre l'étape suivante :

filtrage (244) pour éliminer des échantillons de largeur de bande imprécis desdits échantillons de largeur de bande calculés en rejetant des échantillons de largeur de bande subissant un retard dû au système d'exploitation dudit système client (14), les échantillons de largeur de bande soumis audit retard dû au système d'exploitation étant déterminés sur la base d'une différence de valeurs entre une durée de salve idéale avant la soumission audit retard dû au système d'exploitation et une durée de salve réelle après soumission audit retard dû au système d'exploitation.

2. Procédé selon la revendication 1, **caractérisé en ce que** la pluralité desdites salves de paquets est transmise à un débit maximum par ledit système serveur (12) afin que le retard inter-paquets soit introduit dans chacune desdites salves.

3. Procédé selon la revendication 1 ou 2, comprenant en outre l'étape d'élimination d'échantillons de largeur de bande ayant un paquet manquant dans chacune desdites salves.

4. Procédé selon la revendication 1 ou 3, comprenant en outre l'étape d'élimination d'échantillons de largeur de bande ayant un paquet retransmis.

5. Procédé selon la revendication 1 ou 4, **caractérisé**

**EP 1 382 219 B1**

7

**en ce que** lesdits échantillons de largeur de bande pour chacune desdites salves sont calculés sur la base d'une différence entre un espacement inter-paquets entre le premier et dernier paquets dans chacune desdites salves.

6. Procédé selon la revendication 1 ou 5, **caractérisé en ce que** l'étape de calcul desdits échantillons de largeur de bande comprend les étapes suivantes :

> détermination du temps de début et du temps de fin de la réception des premier et dernier paquets dans chacune desdites salves;
> détermination de la taille de paquet du second paquet et du dernier paquet pour chacune desdites salves; et
> calcul desdits échantillons de largeur de bande sur la base d'une différence entre la taille de paquet du second paquet et du dernier paquet, divisée par une différence entre une durée d'espacement inter-paquets entre les premier et dernier paquets dans chacune desdits salves.

7. Procédé selon l'une quelconque des revendications 1 à 6, **caractérisé en ce que** ladite nouvelle largeur de bande correspond à une valeur médiane desdits échantillons de largeur de bande calculés, pour une liaison à bas débit.

8. Procédé selon l'une quelconque des revendications 1 à 6, **caractérisé en ce que** ladite nouvelle largeur de bande correspond au mode statistique desdits échantillons de largeurs de bande calculées pour une liaison à haut débit.

9. Procédé selon l'une quelconque des revendications 1 à 6, **caractérisé en ce que** ladite nouvelle largeur de bande correspond à une largeur de bande minimum desdits échantillons de largeur de bande calculée si une liaison multicanal est déployée entre ledit serveur (12) et ledit client (14).

10. Dispositif client pour estimer une largeur de bande de goulot d'étranglement entre un serveur (12) et le dispositif client, le dispositif client comprenant :

> des moyens récepteurs qui sont conçus pour recevoir une pluralité de salves constituées de paquets provenant du serveur via une liaison de goulot d'étranglement;
> des moyens générateurs qui sont conçus pour générer un ensemble d'échantillons de largeur de bande sur la base d'une différence entre un espacement inter-paquets entre des paquets dans chacune desdites salves; et
> des moyens de détermination qui sont conçus pour déterminer une nouvelle largeur de bande de goulot d'étranglement à partir desdits échantillons de largeur de bande générés, selon un procédé décrit dans l'une quelconque des revendications 1 à 9.

11. Système serveur-client (10) comprenant un ordinateur serveur (12) comprenant des moyens de transmission conçus pour transmettre une pluralité de salves comprenant des paquets via une liaison de goulot d'étranglement dudit système (10); et un ordinateur client (14) selon la revendication 10.

PACKET PAIR AT
HIGH SPEED

PACKET PAIR AT
LOW SPEED

PACKET PAIR AT
HIGH SPEED

COMPUTE
Bθ

R1

R2

BOTTLENECK LINK

ΔT

ΔT

SPECIAL PACKET
CARRIES Bθ

R1

R2

SPECIAL PACKET
CARRIES Bθ

SENDER

RECEIVER

FIG. 1

FIG. 2

| UDP HEADER | |
|---|---|
| PACKET SEQ. # | BURST # |

FIG. 3

100

120

140

FIG. 4a

FIG. 4b

BURST i$^{TH}$ CONSISTING
OF 3 PACKETS

$S_i(3)$

$S_i(2)$

$S_i(1)$

INTERNET
PATH AS A
BLACK BOX

$t_i(1)$   $t_i(2)$   $t_i(3)$

$\delta(2)$

$\delta(3)$

TIME

$S_i(1)$  $S_i(2)$  $S_i(3)$

IMPULSE FUNCTION ON
INPUT: SEVERAL PACKETS
BACK-TO-BACK

IMPULSE RESPONSE ON
OUTPUT: THE SAME PACKETS
ARE NOW SPREAD OUT

# FIG. 5

ARRIVAL
OF
PACKETS
TO THE
OS

$\Delta T_{i-1}$   $D_b$   $\Delta T_i$   $D_b$   $\Delta T_{i+1}$

ARRIVAL
OF
PACKETS
TO THE
CLIENT

$\Delta T_{i-1}$   $D_b{}^{i-1}$   $\Delta T_i$   $D_b{}^i$   $\Delta T_{i+1}$

# FIG. 6